# EUROPÄISCHE PATENTANMELDUNG

(11) **EP 0 785 399 A2**
(43) Veröffentlichungstag der Anmeldung: **23.07.1997**
(21) Anmeldenummer: 96115331.9
(22) Anmeldetag: 25.09.1996
(51) Int. Cl.: F24F 12/00

(54) **Luft/Luft-Wärmetauschvorrichtung**

(30) Priorität: 20.01.1996 DE 19601988
(71) Anmelder: MAICO ELEKTROAPPARATE-FABRIK GmbH, D-78056 Villingen-Schwenningen (DE)
(72) Erfinder: Fritz, Hans-Lorentz, 88631 Beuron (DE)
(74) Vertreter: Grosse, Rainer, Dipl.-Ing.

(57) **Zusammenfassung**

Die Erfindung betrifft eine Luft/Luft-Wärmetauschvorrichtung, insbesondere für eine Wärmerückgewinnung bei einer Be- und Entlüftung, mit einem den Wärmetauscher passierenden Zuluft- und Abluftweg, wobei im Abluftweg stromab des Wärmetauschers ein Verdampfer einer Luft/Luft-Wärmepumpe liegt, deren Kondensator im Zuluftweg stromab des Wärmetauschers angeordnet ist. Es ist vorgesehen, daß Verdampfer (9) und Kondensator (11) Luftweg-Einschubelemente (29,30) einer der Wärmetauschvorrichtung zuordenbaren, die Luft/Luft-Wärmepumpe (15) bildenden Moduleinheit (28) sind.

## Beschreibung

Die Erfindung betrifft eine Luft/Luft-Wärmetauschvorrichtung, insbesondere für eine Wärmerückgewinnung bei einer Be- und Entlüftung, mit einem den Wärmetauscher passierenden Zuluft- und Abluftweg, wobei im Abluftweg stromab des Wärmetauschers ein Verdampfer einer Luft/Luft-Wärmepumpe liegt, deren Kondensator im Zuluftweg stromab des Wärmetauschers angeordnet ist.

Angesichts der nur begrenzt zur Verfügung stehenden Energiequellen wurden in der Vergangenheit erhebliche Anstrengungen unternommen, den Heizenergieverbrauch durch eine verbesserte Wärmedämmung und durch dichtschließende Fenster zu reduzieren. Besonders dichtschließende Fenster können dazu führen, daß ein natürlicher Luftaustausch nicht mehr im notwendigen Umfang gewährleistet ist. Überdies ist es erforderlich, in der Raumluft enthaltene Feuchtigkeit abzuführen, um ein kondensieren des Wasserdampfs, beispielsweise an kalten Außenwänden, Raumecken und dergleichen, zu verhindern. Die vorstehenden Anforderungen werden mittels einer Beund Entlüftung erfüllt, die als sogenannte Wohnungslüftung mit Wärmerückgewinnung ausgebildet sein kann. Bei diesem System wird beispielsweise einer Wohnung mit Hilfe von Ventilatoren eine Mindestluftmenge zu- beziehungsweise abgeführt. Die relativ warme Abluft passiert einen Wärmetauscher, so daß eine Erwärmung der Zuluft, beispielsweise von Außenluft, erfolgen kann. Um den Wirkungsgrad der Wärmerückgewinnung zu verbessern, ist eine Wärmepumpe vorgesehen, die -zusätzlich zum Wärmetauscher- noch in der Fortluft enthaltene Wärme der Zuluft zuführt. Beim Kauf einer derartigen Vorrichtung muß sich der Anwender entscheiden, ob er eine Ausführung mit oder ohne Luft/Luft-Wärmepumpe einsetzen will. Jede der beiden Ausführungsformen ist konstruktiv unterschiedlich gestaltet, so daß eine spätere Umrüstung nicht möglich ist.

Der Erfindung liegt die Aufgabe zugrunde, eine Luft/Luft-Wärmetauschvorrichtung der eingangs genannten Art zu schaffen, bei der problemlos Umstellungs- und Umrüstmaßnahmen ergriffen werden können.

Diese Aufgabe wird erfindungsgemäß dadurch gelöst, daß Verdampfer und Kondensator Luftweg-Einschubelemente einer der Wärmetauschvorrichtung zuordenbaren, die Luft/Luft-Wärmepumpe bildenden Moduleinheit sind. Durch die erfindungsgemäße Modulausbildung kann der Anwender jederzeit frei wählen, ob eine mit oder ohne Wärmepumpe ausgestattete Version vorliegen soll. Bereits bestehende Wärmetauschvorrichtungen lassen sich problemlos umrüsten, indem die Moduleinheit der bestehenden Einrichtung zugeordnet wird. Da Verdampfer und Kondensator als Luftweg-Einschubelemente ausgebildet sind, werden sie bei der Modulzuordnung automatisch in den entsprechenden Luftweg, also in den Abluftweg beziehungsweise den Zuluftweg eingeschoben. Die Herstellung neuer Aggregate vereinfacht sich aufgrund der Erfindung erheblich, da nur ein, den Wärmetauscher aufweisendes Grundgerät je Leistungsklasse erstellt werden muß, dem dann -je nach Bestellung- die Wärmepumpe aufweisende Moduleinheit zugeordnet wird oder nicht.

Nach einer Weiterbildung der Erfindung ist vorgesehen, daß der Wärmetauscher als Kreuzstromwärmetauscher ausgebildet ist. Dies bedeutet, daß Zuluft und Abluft den Wärmetauscher kreuzweise passieren, wobei jeweils stromabseitig des Wärmetauschers eine Aufnahmekammer für die Aufnahme des Verdampfers und Kondensators der Wärmepumpe ausgebildet ist. Wird dem Grundgerät keine Wärmepumpe zugeordnet, so bleiben die Aufnahmekammern frei.

Vorteilhaft ist es ferner, wenn die Moduleinheit anstelle einer abnehmbaren Gehäusewand an der Wärmetauschvorrichtung angeordnet ist. Mithin kann eine Umrüstung eines Grundgeräts derart erfolgen, daß die Gehäusewände entfernt und anstelle dieser Gehäusewand die Moduleinheit am Grundgerät festgelegt wird. Die von der Gehäusewand erfolgende Abdichtung des Geräteinnern zur Atmosphäre wird dann von der Moduleinheit mit übernommen.

Vorzugsweise ist eine symmetrische Ausbildung derart vorgenommen, daß die Moduleinheit sowohl der einen Seite des Wärmetauschers als auch der anderen Seite des Wärmetauschers zuordenbar ist. Auf der einen Seite wirkt die Wärmepumpe in der zuvor beschriebenen Art und Weise, nämlich zur Aufheizung der Zuluft. Wird die Moduleinheit der anderen Seite des Wärmetauschers zugeordnet, so tauschen Verdampfer und Kondensator ihre Plätze, wodurch der Zuluftweg einer Kühlung unterzogen ist, was beispielsweise für eine Raumkühlung in der warmen Jahreszeit genutzt werden kann. Im Winter erfolgt dann eine Ummontage, so daß Heizenergie eingespart wird.

Schließlich ist es vorteilhaft, wenn der Verdampfer und der Kondensator auslegeartig von der Moduleinheit abstehen. Wird die Moduleinheit seitlich dem Grundgerät zugeordnet, tritt der auslegeartig vorstehende Verdampfer und Kondensator in die entsprechenden Aufnahmeräume ein. Durch einfaches Verschrauben mit dem Grundgerät ist die Umrüstarbeit abgeschlossen.

Die Zeichnung veranschaulicht die Erfindung anhand eines Ausführungsbeispiels und zwar zeigt:
- Figur 1: eine schematische Ansicht eines Hauses mit Luft/Luft-Wärmetauschvorrichtung und
- Figur 2: eine schematische Ansicht der Luft/Luft-Wärmetauschvorrichtung mit Luft/Luft-Wärmepumpe in Explosionsdarstellung.

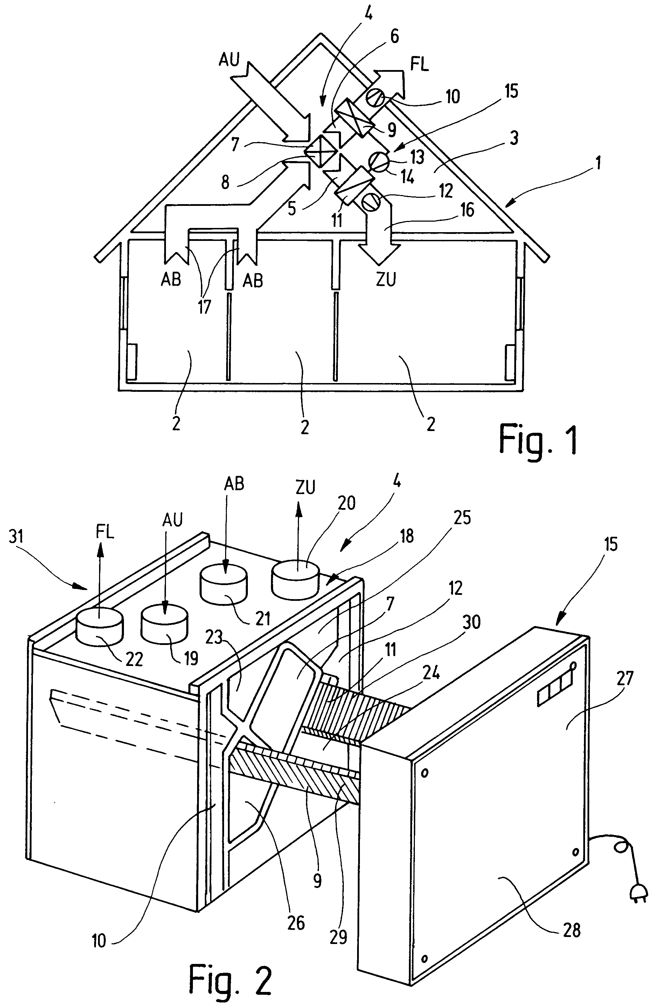

Die Figur 1 zeigt ein Einfamilienhaus 1, das mehrere Räume 2 sowie einen Dachboden 3 aufweist. Auf dem Dachboden 3 ist eine Luft/Luft-Wärmetauschvorrichtung 4 angeordnet, die einen Zuluftweg 5 und einen Abluftweg 6 aufweist, die kreuzförmig zueinander verlaufen. Im Kreuzungspunkt befindet sich ein Luft/Luft-Wärmetauscher 7, der als Kreuzwärmetauscher 8 ausgebildet ist. Stromabseitig des Wärmetauschers 7 befindet sich im Abluftweg 6 ein Verdampfer 9, dem ein Ventilator 10 folgt. Im Zuluftweg 5 ist -stromab zum Wärmetauscher 7- ein Kondensator 11 angeordnet, dem ein Ventilator 12 folgt.

Verdampfer 9 und Kondensator 11 wirken mit einem Kompressor 13 sowie einem Expander 14 zusammen. Verdampfer 9, Kondensator 11, Kompressor 13 und Expander 14 bilden eine Luft/Luft-Wärmepumpe 15. Der Zuluftweg 5 steht für die Zuführung von Außenluft AU stromaufseitig des Wärmetauschers 7 mit der Atmosphäre in Verbindung. Das andere Ende des Luftwegs 5 bildet stromabwärts des Ventilators 12 eine Luftzuführung 16, mittels der Zuluft ZU in mindestens einen der Räume 2 des Einfamilienhauses 1 eingebracht wird. Die Antriebsquelle hierfür bildet der Ventilator 12. Mindestens einer der Räume 2 des Einfamilienhauses 1 ist an eine Abluftleitung 17 angeschlossen, mittels der Abluft AB dem Abluftweg 6 zugeführt wird, wodurch die Abluft den Wärmetauscher 7 und anschließend den Verdampfer 9 passieren kann und vom Ventilator 10 an die Atmosphäre als Fortluft FL abgeführt wird.

Im Betrieb wird mittels des Wärmetauschers 7 relativ kühle Außenluft AU erwärmt. Eine weitere Erwärmung erfolgt mittels des Kondensators 11, so daß dem Raum 2 erwärmte Zuluft ZU zugeführt werden kann. Die Energie für die Erwärmung liefert die Abluft AB, die -wie beschrieben- hierzu den Wärmetauscher 7 und den Verdampfer 9 passiert.

Die Figur 2 zeigt -in schematischer Darstellung-die Luft/Luft-Wärmetauschvorrichtung 4, die ein Grundgerät 18 aufweist, in dem der Luft/Luft-Wärmetauscher 7 angeordnet ist. Das Grundgerät 18 weist vier Rohr-Anschlußstutzen 19, 20, 21 und 22 auf, wobei der Rohr-Anschlußstutzen 19 der Zuführung von Außenluft AU dient und die erwärmte Außenluft den Rohr-Anschlußstutzen 20 als Zuluft ZU verläßt. Die Abluft AB wird dem Rohr-Anschlußstutzen 21 zugeführt, die als Fortluft FL das Grundgerät 18 über den Rohr-Anschlußstutzen 22 verläßt. Der Rohr-Anschlußstutzen 19 führt zu einem Vorraum 23, der dem Wärmetauscher 7 vorgelagert ist und beispielsweise der Aufnahme eines Luftfilters dienen kann. Im Zuge des Zuluftwegs 5 ist dein Wärmetauscher 7 eine Aufnahmekammer 24 nachgeschaltet, die der Aufnahme des Kondensators 11 dient. Der Ventilator 12 für die Zuluft befindet sich -gemäß Figur 2- in der rechten Gehäusehälfte des Grundgeräts 18. Der Rohr-Anschlußstutzen 21 führt zu einem Vorraum 25, der stromaufwärts zum Wärmetauscher 7 liegt. Der Vorraum kann zur Aufnahme eines Luftfilters dienen. Stromabseitig zum Wärmetauscher 7 ist eine Aufnahmekammer 26 ausgebildet, die der Aufnahme des Verdampfers 9 der Wärmepumpe 15 dient und -stromabseitig- über den linksseitig im Gehäuse des Grundgeräts 18 angeordneten Ventilator 10 zum Rohr-Anschlußstutzen 22 führt.

Die Wärmepumpe 15 weist ein Gehäuse 27 auf, das dem Grundgerät 18 seitlich zugeordnet, beispielsweise mittels geeigneter Schrauben dort festgeschraubt werden kann. Das Gehäuse 27 bildet damit eine Abdichtung des Grundgeräts 18, das heißt, es übernimmt die Funktion einer nicht dargestellten Gehäusewand des Grundgeräts 18. Wird dem Grundgerät 18 keine Wärmepumpe 15 zugeordnet, so wird die entsprechende Gehäuseseite des Grundgeräts mittels der nicht dargestellten Gehäusewand verschlossen, die mit den gleichen, gegebenenfalls lediglich kürzen Befestigungsschrauben dort festlegbar ist.

Die Wärmepumpe 15 ist als Moduleinheit 28 ausgebildet, die sämtliche für den Betrieb der Wärmepumpe 15 erforderliche Einrichtungen aufweist. Verdampfer 9 und Kondensator 11 ragen auslegerartig von der Moduleinheit 28 ab. Sie sind derart angeordnet, daß sie beim Zuordnen der Wärmepumpe 15 zum Grundgerät 18 selbsttätig in die Aufnahmekammern 26 und 24 eintreten. Insofern bilden Verdampfer 9 und Kondensator 11 Luftweg-Einschubelemente 29 und 30.

Es ergibt sich folgende Funktion: Soll ein Grundgerät für die bezüglich Figur 1 beschriebene Be- und Entlüftung verwendet werden, so wird diesem keine Wärmepumpe 15 zugeordnet, das heißt die entsprechende Gehäuseseite des Grundgeräts 18 ist mittels einer nicht dargestellten, plattenförmigen Gehäusewand verschlossen. Soll dem Grundgerät jedoch eine Wärmepumpe 15 zur Wirkungsgradverbesserung zugeordnet werden, so wird die Gehäusewand durch Lösen entsprechender Befestigungsmittel abgenommen und die Wärmepumpe 15 anstelle der Gehäusewand montiert. Hierbei treten Verdampfer 9 und Kondensator 11 in die entsprechenden Aufnahmekammern 26 und 24 ein und das Gehäuse der Wärmepumpe 15 übernimmt die Abdichtung des Grundgeräts 18. Auf diese Art und Weise sind Verdampfer 9 und Kondensator 11 in den Zuluftweg 5 beziehungsweise Abluftweg 6 eingefügt. Weitere Aggregate, wie beispielsweise Kompressor 13 und Expander 14 sind im Gehäuse der Wärmepumpe 15 angeordnet.

Wird -in der warmen Jahreszeit- die Wärmepumpe 15 nicht der aus der Figur 2 ersichtlichen Seite des Grundgeräts 18 zugeordnet, sondern an der gegenüberliegenden Seite (Pfeil 31) an dein Grundgerät 18 angeflanscht, so tritt der Verdampfer 9 in die Aufnahmekammer 24 und der Kondensator 11 in die Aufnahmekammer 26 ein. Die gegenüberliegende Seite des Grundgeräts 18 ist mittels einer plattenförmigen Gehäusewand verschlossen. Diese "gedrehte" Zuordnung führt dazu, daß im Zuluftweg 5 der Kondensator 11 als Kälteelement wirkt, so daß dem Raum 2 gekühlte Zuluft zugeführt wird.

Aufgrund der Erfindung ist eine einfache und preisgünstige Möglichkeit realisiert, eine Wärmetauschvorrichtung für die Be- und Entlüftung eines Gebäudes oder dergleichen mit einer Wärmepumpe auszustatten oder nachzurüsten. Die Wärmepumpe kann für Heizzwecke, jedoch auch für Kühlzwecke eingesetzt werden. Die Umstellung vom Heizbetrieb auf den Kühlbetrieb ist sehr einfach und kann aufgrund der Modulbauweise der Wärmepumpe mit wenigen Handgriffen durchgeführt werden.

## Patentansprüche

1. Luft/Luft-Wärmetauschvorrichtung, insbesondere für eine Wärmerückgewinnung bei einer Be- und Entlüftung, mit einem den Wärmetauscher passierenden Zuluft- und Abluftweg, wobei im Abluftweg stromab des Wärmetauschers ein Verdampfer einer Luft/Luft-Wärmepumpe liegt, deren Kondensator im Zuluftweg stromab des Wärmetauschers angeordnet ist, **dadurch gekennzeichnet**, daß Verdampfer (9) und Kondensator (11) Luftweg-Einschubelemente (29,30) einer der Wärmetauschvorrichtung zuordenbaren, die Luft/Luft-Wärmepumpe (15) bildenden Moduleinheit (28) sind.

2. Wärmetauschvorrichtung nach Anspruch 1, **dadurch gekennzeichnet**, daß der Wärmetauscher (7) als Kreuzwärmetauscher (8) ausgebildet ist.

3. Wärmetauschvorrichtung nach einem der vorhergehenden Ansprüche, **dadurch gekennzeichnet**, daß die Moduleinheit (28) anstelle einer abnehmbaren Gehäusewand an der Wärmetauschvorrichtung (4) angeordnet ist.

4. Wärmetauschvorrichtung nach einem der vorhergehenden Ansprüche, **gekennzeichnet durch** eine symmetrische Ausbildung derart, daß die Moduleinheit (28) der anderen Seite des Wärmetauschers (7) zur Kühlung der Luft des Zuluftwegs (5) zuordenbar ist.

5. Wärmetauschvorrichtung nach einem der vorhergehenden Ansprüche, **dadurch gekennzeichnet**, daß der Verdampfer (9) und der Kondensator (11) auslegerartig von der Moduleinheit (28) abstehen.
